# EUROPÄISCHE PATENTSCHRIFT

(11) **EP 0 600 282 B1**
(45) Veröffentlichungstag und Bekanntmachung des Hinweises auf die Patenterteilung: **11.03.1998**
(21) Anmeldenummer: 93118345.3
(22) Anmeldetag: 12.11.1993
(51) Int. Cl.: C01C 3/10

(54) **Alkalicyanid-Granulate und Verfahren zu ihrer Herstellung**
Alkali cyanide granules and process for the preparation thereof
Granulés des cyanures alkalins et procédé pour leur préparation

(30) Priorität: 04.12.1992 DE 4240576
(43) Veröffentlichungstag der Anmeldung: 08.06.1994
(73) Patentinhaber: Degussa Aktiengesellschaft, 60311 Frankfurt (DE)
(72) Erfinder: Riemenschneider, Herbert Dr., D-63571 Gelnhausen (DE); Alt, Christian, D-63571 Gelnhausen (DE); Claus, Martina, D-60326 Frankfurt (DE); Lorösch, Jürgen, Dr., D-63456 Hanau (DE); Leutner, Josef, D-63579 Freigericht (DE); Mönch, Heinz, Dr., D-50321 Brühl (DE)

(56) Entgegenhaltungen:
- EP-A- 0 600 211
- DE-A- 3 832 883
- DE-B- 1 144 246
- US-A- 3 323 860
- US-A- 4 107 274
- Glatt Firmenschrift AGT: Anlage für das kontinuierliche Granulieren und Trocknen. Februar 1992
- CHEM. ING TECHN., Bd.62, Nr.10, September 1990, VCH (WEINHEIM; DE) Seiten 822 - 834 H. UHLEMANN 'Kontinuierliche Wirbelschicht-Sprühgranulation.'
- CHEMICAL ABSTRACTS, vol. 96, no. 10, März 1982, Columbus, Ohio, US; abstract no. 70839m, A.P. ZVIUNOV ET AL. 'Autonomus air heater for drying a sodium cyanide solution in a fluidized bed apparatus.' Seite 111 ; & PROM. ENERG., Bd.9, 1990 Seiten 32 - 35
- CHEMICAL ABSTRACTS, vol. 68, no. 24, 1968, Columbus, Ohio, US; abstract no. 106506p, D. SANDRU ET AL. 'Process for evaporating and drying solutions of cyanides.' Seite 10299 ; & IT-A-48 903 (MINISTRY OF CHEMICAL INDUSTRY)

## Beschreibung

Die Erfindung betrifft neue Alkalicyanid-Granulate auf der Basis von Natriumcyanid oder Kaliumcyanid, deren Teilchen im wesentlichen kugelförmig sind und die sich gegenüber vorbekannten Granulaten durch außergewöhnliche Eigenschaften, darunter einen minimalen Abrieb und wesentlich verminderte Verbackungsneigung auszeichnen, sowie ein Verfahren zur Herstellung der Granulate.

Die beiden Alkalicyanid-Salze Natrium- und Kaliumcyanid werden zur Herstellung von galvanischen Bädern und von Härtesalzbädern sowie zur Synthese organischer Verbindungen verwendet. Darüber hinaus wird Natriumcyanid in großen Mengen zur Goldgewinnung durch Cyanidlaugung von Erzen eingesetzt.

Wegen ihrer Giftigkeit werden die genannten Alkalicyanide bevorzugt als Preßlinge oder staubarmes Mahlgranulat gehandelt. Handelsübliche, großtechnisch hergestellte Natrium- und Kaliumcyanid-Granulate bestehen aus unregelmäßig geformten Teilchen mit einem Teilchenspektrum, das sich beispielsweise zwischen etwa 0,2 und 4 mm erstreckt. Die Preßlinge werden mit rotierenden Walzenpressen oder mit Stempelpressen erzeugt. Die Granulate werden durch Zerkleinerung der Preßlinge mittels einer Mahlvorrichtung hergestellt. Die unregelmäßige Form derartiger Granulate ist die Ursache von unerwünschter Staubbildung während der Handhabung.

Die bekannten NaCN- und KCN-Handelsformen Preßlinge, Mahlgranulat und Pulver neigen stark zum Verklumpen und zum Anbacken an den Innenflächen von Rohrleitungen, Armaturen und Apparaten aus Stahl oder Edelstahl. Die Neigung zum Verklumpen und Anbacken nimmt mit abnehmender Korngröße und insbesondere zunehmender Feuchte und Belastung zu und macht die Handhabung, wie Lagern in Silos, Dosieren und Fördern, schwierig und aufwendig.

Wegen dieser Schwierigkeiten wurde von der Anmelderin der vorliegenden Anmeldung nach einer Lieferform gesucht, die nicht oder zumindest weniger zum Verklumpen und Anbacken neigt. NaCN-Filterkuchen, der nach bekannten Verfahren hergestellt wurde, konnte zwar in ein etwa kugelförmiges Granulat umgewandelt und anschließend getrocknet werden, das resultierende NaCN-Granulat lag jedoch beim Schüttgewicht mit unter 600 g/dm³ zu niedrig und die Abriebfestigkeit war unbefriedigend.

Ein weiterer Nachteil der vorbekannten Natrium- und Kaliumcyanid-Granulate besteht in dem technisch aufwendigen, mehrere Stufen umfassenden Verfahren zu deren Herstellung, das von wäßriger NaCN- bzw. KCN-Lösung ausgeht: In der ersten Stufe wird das Alkalicyanid aus der Lösung auskristallisiert, dies läßt sich beispielsweise in einem Vakuumkristaller durchführen. Das auskristallisierte Produkt wird mittels bekannter Techniken von der Mutterlauge abgetrennt. Nach einer ein- oder mehrstufigen Trocknung wird das Alkalicyanid-Pulver zu Preßlingen kompaktiert; letztere werden zu dem genannten Granulat zerkleinert. Das Verfahren erfordert somit nicht nur einen großen Aufwand an Apparaturen und Bedienungspersonal, sondern die aufgezeigte Neigung von NaCN und KCN zu Anbackungen zwingt zu Abstellungen und mindert die Verfügbarkeit der Gesamtanlage.

Die DE-A 38 32 883 richtet sich auf die Herstellung von festen teilchenförmigen Alkalicyaniden, insbesondere NaCN, wobei HCN kontinuierlich mit fein verteilten Tröpfchen einer wäßrigen Alkalihydroxidlösung in Kontakt gebracht wird. Das Schüttgewicht von nicht nachbehandeltem Natriumcyanid liegt meist im Bereich von 0,2 bis 0,4 kg/l. Das Produkt kann zwar in einem Wirbelbett granuliert werden, jedoch lehrt dieses Dokument weder Verfahrensparameter hierzu noch Stoffdaten des Granulats.

Aus dem US-Patent 4,107,274 ist bekannt, die Verbackungsneigung von Alkalimetallhalogeniden und solche enthaltenden Gemischen durch Zugabe eines hydrophilen und/oder hydrophoben Materials, beispielsweise eines Metallsilikats, in Verbindung mit einem komplexen Eisencyanid auf einen hydroxylgruppenhaltigen Träger zu mindern. Dieses Dokument lehrt nicht, die Verbackungsneigung von Alkalimetallcyaniden durch Zugabe von Metallsilikaten allein zu mindern.

In der Firmenschrift Glatt® AGT (Feb. 92 - 3000 D (W)) der Firma Glatt Ingenieurtechnik GmbH, Weimar erscheint als Anwendungszweck der dort beschriebenen Anlage zur kontinuierlichen Granulier-Trocknung, welche auf dem Prinzip der auch als Wirbelschicht-Sprühgranulation bezeichneten Technik (siehe H. Uhlemann in Chem.-Ing. Technik 62 (1990) Nr. 10, S. 822-834) beruht, unter anderem 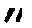 Karbonate & Zyanide". In der genannten Firmenschrift wird aber nicht offenbart, ob sich der Hinweis auf Alkalimetall-, Erdalkalimetall- oder Schwermetallcyanide oder auf komplexe Cyanide bezieht. Auch lassen sich der Firmenschrift keine Angaben zu den Eigenschaften von Cyanid-Granulaten entnehmen. Aus der genannten Firmenschrift wird ersichtlich, daß die Sprühdüse im Wirbelschichttrockner derart angeordnet ist, daß die zu versprühende Lösung von oben auf die Wirbelschicht gesprüht wird. Der Artikel von Uhlemann lehrt die Grundprinzipien der Sprühgranulation einschließlich der Verwendung von Zweistoffdüsen und verschiedene Möglichkeiten der Positionierung derselben in der Wirbelschicht-Sprühgranulationsvorrichtung.

Nach dem in der EP-A 0 600 211 offenbarten Verfahren läßt sich festes Natriumcyanid-Granulat mit einem Durchmesser des Granulats von 2 bis 6 mm in zwei Verfahrensstufen erzeugen, wobei in einer ersten Stufe eine wäßrige Natriumcyanidlösung in einen Wirbelschichtgranulator gesprüht und mittels warmer Luft aus einem nachgeschalteten zweiten Wirbelschichttrockner Granulat erzeugt wird; die der ersten Stufe zugeführte Luft wird in der Wirbelschicht der ersten Stufe auf eine Temperatur von 60 bis 90 °C abgekühlt. In der zweiten Stufe wird nachgetrocknet, wobei die Zuluft eine Temperatur von 150 bis 230 °C aufweist.

Aufgabe der Erfindung ist somit, Alkalicyanid-Granulate auf der Basis von Natrium- oder Kaliumcyanid zur Verfügung zu stellen, die die eingangs dargelegten Nachteile handelsüblicher Granulate in vermindertem Umfang aufweisen. Zudem sollten die Granulate durch eine spezifische Eigenschaftskombination gekennzeichnet sein. Eine weitere Aufgabe richtet sich darauf, ein Verfahren aufzuzeigen, das es gestattet, die neuen Granulate durch Wirbelschicht-Sprühgranulation herzustellen, wobei Verkrustungsprobleme, wie sie im vorbekannten Verfahren auftraten, vermieden werden sollten.

Gefunden wurden Alkalicyanid-Granulate auf der Basis von Natriumcyanid oder Kaliumcyanid mit
ii) einem Teilchendurchmesser im Bereich von mindestens 0,1 bis 20 mm für mindestens 99 Gew.-% des Granulats,
(iii) einem Schüttgewicht von mindestens 600 g/dm³
(iv) einem Abrieb von weniger als 1 Gew.-%, gemessen im Roll-Abriebtest (Abriebtester TAR der Fa. Erweka mit 20 g Probe, 60 min 20 U/min),
(v) einem Verbackungsindex von maximal 4, gemessen nach 14-tägiger Belastung von 100 g in einem Zylinder der lichten Weite von 5,5 cm mit 10 kg,
   welche dadurch gekennzeichnet sind, daß sie
(i) aus im wesentlichen kugelförmigen Teilchen mit glatter oder himbeerförmiger Oberflächenstruktur bestehen.

Erfindungsgemäße Alkalicyanid-Granulate weisen im allgemeinen einen Gehalt von mindestens 80 Gew.-%, vorzugsweise mindestens 93 Gew.-%, Natrium- bzw. Kaliumcyanid auf. Außer der Restfeuchte, welche überraschenderweise einen Wert bis maximal 5 Gew.-% annehmen kann, vorzugsweise aber unter 3 Gew.-% und insbesondere unter 1 Gew.-% liegt, kann das Granulat außer rohstoff- und verfahrensbedingten Nebenprodukten, wie Alkalihydroxid, Alkaliformiat und Alkalicarbonat, die genannten Nebenprodukte in größerer als üblicher Menge und/oder andere Hilfsstoffe enthalten, um bestimmte Eigenschaften der Granulate in gezielter Weise zu verändern.

Die Herstellung von Alkalicyanid-Granulaten mit erhöhtem Wassergehalt, etwa oberhalb 1 Gew.-% bis 5 Gew.-%, führt zu Einsparungen an Trocknungsenergie. Derartige Granulate sind von wirtschaftlichem Interesse, wenn der Verbraucher das Granulat ohnehin in Wasser auflöst. Entgegen den Erwartungen sind auch erfindungsgemäße Granulate mit erhöhtem Wassergehalt ausreichend verbackungsresistent.

Für die Minenindustrie ist es beispielsweise von Interesse, Natriumcyanid mit höherem Natriumhydroxid-Gehalt als den üblicherweise anwesenden 0,2 bis 0,6 Gew.-% zu beziehen, weil bei der Herstellung verdünnter, wäßriger Lösungen auf der Mine in der Regel Natriumhydroxid zugesetzt werden muß. Die Herstellung von Natriumcyanid-Granulat mit einem NaOH-Gehalt von bis maximal 3 Gew.-% bereitet keine Probleme.

Die anderen Hilfsstoffe können gleichförmig in den einzelnen Granulatteilchen verteilt sein oder sich im wesentlichen gleichmäßig verteilt auf der Oberfläche der Granulatteilchen befinden. Bei den Hilfsstoffen handelt es sich beispielsweise um Antibackmittel, welche geeignet sind, die Backneigung der erfindungsgemäßen Alkalicyanid-Granulate, welche bereits gegenüber handelsüblichen Granulaten vermindert ist, weiter zu reduzieren. Eine derart verminderte Backneigung ist dann von Wichtigkeit, wenn das Granulat in Silos, insbesondere in klimatisch feuchten Zonen, zwischengelagert werden muß. Antibackmittel können in wirksamer Menge in beziehungsweise auf den Granulaten anwesend sein. Wirksam bedeutet hierbei, daß der Verbackungsindex durch die Anwesenheit des Antibackmittels niedriger ist als in dessen Abwesenheit. Antibackmittel enthaltende Granulate weisen vorzugsweise einen Verbackungsindex von maximal 3 auf.

Geeignete Antibackmittel können beispielsweise ausgewählt sein aus der Gruppe hydrophobierender organischer Verbindungen, wie Na- oder K-Salze höherer Fettsäuren. Eine weitere Gruppe sind natürliche und synthetische Kieselsäuren und/oder Silikate. Obgleich hydrophobierte Kieselsäuren und Silikate nicht ausgeschlossen werden, werden im allgemeinen hydrophile Stoffe bevorzugt, weil es in wäßrigen Systemen damit zu keinen Benetzungsproblemen des Granulats kommt. Besonders bevorzugt werden in wäßriger Dispersion alkalisch wirkende Silikate, insbesondere (Na,Ca)-silikate und Natriumaluminiumsilikate.

Die Einsatzmenge der vorzugsweise hydrophilen Silikate liegt bei gleichförmiger Verteilung innerhalb des Granulatkorns zwischen 0,1 und 5 Gew.-%. Sofern sich eines oder mehrere der Silikate im wesentlichen auf der Oberfläche des Granulats befindet, liegt die Einsatzmenge im allgemeinen zwischen 0,01 und 4 Gew.-%, insbesondere zwischen 0,1 und 2 Gew.-%. Bevorzugte Silikate weisen eine BET-Oberfläche (DIN 66131) von etwa 30 bis 120 m²/g, einen pH-Wert einer 5 %igen wäßrigen Suspension von 7 bis 12, insbesondere 9 bis 12, auf; die Hauptbestandteile liegen im Bereich von 40 bis 92 % SiO₂, 0 bis 36 % Al₂O₃, 2 bis 22 % Na₂O, 0 bis 6 % CaO; besonders bevorzugt sind Silikate mit 90 bis 92 % SiO₂, 5 bis 7 % CaO und etwa 2 % Na₂O.

Die Einsatzmenge organischer Hydrophobierungsmittel, wie z. B. Na- oder K-Stearat, welche dem fertigen Granulat zugemischt werden und sich damit im wesentlichen auf der Oberfläche der Teilchen befinden, beträgt 0,1 bis 4 Gew.-%, insbesondere 0,1 bis 2 Gew.-%. Derartige Hydrophobierungsmittel verzögern die Feuchtigkeitsaufnahme der hygroskopischen Alkalicyanide an der Luft und reduzieren die Verklumpungsneigung.

Die im wesentlichen kugelförmigen Granulatteilchen weisen eine glatte oder himbeerförmig strukturierte Oberfläche auf. Der Begriff "im wesentlichen" zeigt an, daß geringfügige Abweichungen von der Kugelgestalt, beispielsweise leichte Ovalformen, eingeschlossen sind.

Der Durchmesser der Teilchen des erfindungsgemäßen NaCN-und KCN-Granulats liegt im wesentlichen im Bereich von mindestens 0,1 mm bis 20 mm. Der Begriff "im wesentlichen" bedeutet, daß mindestens 99 Gew.-% des Granulats innerhalb des Bereichs liegen. Ein bevorzugter Bereich liegt zwischen 1 und 10 mm. Nach dem erfindungsgemäßen Verfahren hergestellte Granulate zeichnen sich ferner dadurch aus, daß das Teilchenspektrum sehr schmal ist; Bei einem mittleren Korndurchmesser im Bereich von 2 bis 9 mm liegt der Durchmesser der Teilchen im wesentlichen im Bereich des durchschnittlichen Teilchendurchmessers plus/minus weniger als 1 mm, vorzugsweise plus/minus weniger als 0,5 mm.

Von technischer Bedeutung ist das Schüttgewicht der Granulate; meist liegt das Schüttgewicht oberhalb 650; bevorzugte Granulate weisen ein Schüttgewicht von größer 700 g/l bis 950 g/l auf. In Anbetracht der Giftigkeit der Alkalicyanide und damit des erforderlichen hohen Verpackungsaufwands ist die Fachwelt an einem möglichst hohen Schüttgewicht interessiert. Wie bereits zuvor dargelegt, bereitete es bisher Schwierigkeiten, Granulate zu erzeugen, welche die anspruchsgemäße Eigenschaftskombination bezüglich der Form und Größe der Teilchen, des minimalen Abriebs und der verminderten Verbackungsneigung und gleichzeitig ein hohes Schüttgewicht im erwünschten Bereich aufweisen.

Der Verbackungsindex erfindungsgemäßer Granulate beträgt maximal 4, vorzugsweise maximal 3.

Der Verbackungsindex, auch als Druckfestigkeit bezeichnet, wird durch Belastung der Probe unter definierten Bedingungen ermittelt und anhand einer Bewertungsskala bewertet. Zur Durchführung werden 100 g Probe in einen senkrecht auf einer Unterlage gestellten, rohrförmigen, Entlüftungslöcher (∅ 1 mm) aufweisenden Zylinder der lichten Weite von 55 mm gefüllt und mittels eines Stempels mit 10 kg belastet; Belastungsdauer 14 Tage bei Raumtemperatur (20 bis 25 °C) und Raumfeuchte (50 bis 70 % relative Feuchte). Nach Entfernen des Stempels wird der Zylinder hochgezogen und das Verbackungsverhalten bewertet.

| Index | Kriterien |
|---|---|
| 1 | völlig unverändert; glatt rieselnd |
| 2 | teilweise lose zusammenhaftend; leicht in Originalzustand zerfallend |
| 3 | locker geformt; durch leichten Fingerdruck weitestgehend zerfallend |
| 4 | locker verbacken; mit mäßigem Fingerdruck noch zerfallend |
| 5 | halbfest verbacken; mit Fingerdruck nicht mehr zerfallend |
| 6 | fest geformt |

Erfindungsgemäße Granulate sind im wesentlichen abriebfest, wobei als Abrieb Teilchen kleiner 0,1 mm verstanden werden. Die Kugelform der Granulate führt praktisch zu keinem Abrieb. Der Abrieb, gemessen im Roll-Abriebtest - Abriebtester TAR der Fa. Erweka Apparatebau GmbH, D-Heusenstamm anhand einer 20 g-Probe, 1 Stunde Umlauf bei 20 U/min - weniger als 1 Gew.-%, meist weniger als 0,5 Gew.-%. Der Abrieb handelsüblichen Granulats, abgesiebt auf Teilchen größer 1 mm, beträgt demgegenüber 2 bis 3 Gew.-%. Wird erfindungsgemäß hergestelltes Granulat mit einer vergleichbaren Siebfraktion handelsüblichen Granulats verglichen, beträgt der Abrieb erfindungsgemäßer Granulate im allgemeinen weniger als ein Zehntel des Werts der jeweiligen Fraktion des handelsüblichen Granulats. Die gute Rieselfähigkeit erfindungsgemäßer Granulate sowie die hohe Abriebbeständigkeit tragen wesentlich zur leichteren und sicheren Handhabung bei.

Wie zuvor dargelegt, weisen erfindungsgemäßes Natriumcyanid-Granulat und Kaliumcyanid-Granulat gegenüber handelsüblichen Granulaten in mehrfacher, für die Praxis relevanter Hinsicht wesentlich bessere Stoffeigenschaften auf. Erfindungsgemäße Granulate sind rieselfähig, und bei der Handhabung bildet sich im Gegensatz zu handelsüblichen Granulaten praktisch kein Staub. Die Granulate lassen sich wegen ihrer wesentlich reduzierten Verbackungsneigung in Silos lagern und nach Bedarf abziehen - dies war mit vorbekannten Granulaten praktisch nicht möglich. Silo-Fahrzeuge lassen sich einfach entleeren und das bisher notwendige Auslaugen erübrigt sich. Es war nicht vorhersehbar, daß sich die anspruchsgemäßen Stoffeigenschaften in ein und dem gleichen Granulat vereinigen lassen.

Gefunden wurde ein Verfahren zur Herstellung erfindungsgemäßer Alkalicyanid-Granulate auf der Basis von Natriumcyanid oder Kaliumcyanid durch Aufsprühen einer mindestens 10 Gew.-% Alkalicyanid enthaltenden wäßrigen Lösung oder Suspension in einer Vorrichtung zur Wirbelschicht-Sprühgranulation auf Alkalicyanid-Keime, Verdampfen des Wassers mittels eines durch die Wirbelschicht strömenden Trocknungsgasstroms, dessen Eingangstemperatur 150 bis 450 °C beträgt und Austragen des Granulats in an sich bekannter Weise aus der Vorrichtung und Rückführen des anfallenden Staubs in diese, das dadurch gekennzeichnet ist, daß man die Temperatur der Wirbelschicht auf 110 bis 350 °C einstellt und die wäßrige Lösung oder Suspension mittels einer oder mehrerer innerhalb der Wirbelschicht angeordneter Sprühdüsen, vorzugsweise Zweistoffdüsen, auf die Alkalicyanid-Keime sprüht.

Der Aufbau und die Wirkungsweise einer erfindungsgemäß zu verwendenden Wirbelschicht-Sprühgranulationsvorrichtung ist den eingangs zitierten Dokumenten zu entnehmen. Bei dem Trocknungsgas handelt es sich im allgemeinen um Luft, welche als Durchluft oder Umluft schaltbar ist. Im Hinblick auf die leichte Bildung von Alkalicarbonaten aus der Alkalicyanid-Lösung mit Kohlendioxid der Luft wird eine Umluftschaltung bevorzugt: Die aus dem Wirbelschicht-Sprühgranulator austretende Trocknungsluft wird also nach Entwässerung wieder aufgeheizt und zum Betreiben des Granulators genutzt. Die Eingangstemperatur des Trocknungsgases liegt meist im Bereich zwischen 150 und 450 °C, vorzugsweise oberhalb 200 °C. Das Trocknungsgas verläßt den Granulator im allgemeinen mit einer Temperatur zwischen 70 und 300 °C, vorzugsweise oberhalb 110 °C.

Für eine problemlose Granulatbildung ist wesentlich, die Wirbelschichttemperatur sowie die Massendichte der Keime in der Wirbeischicht und die Sprührate aufeinander abzustimmen. Der Fachmann wird diese Größen in Optimierungsversuchen ermitteln. Die Temperatur der Wirbelschicht wird vorzugsweise zwischen 130 und 300 °C, gehalten. Zur Erzeugung von Granulaten mit überwiegend himbeerförmiger Struktur wird im allgemeinen bei niedrigerer Wirbelschicht-Temperatur und höherer Sprührate gearbeitet als zur Erzeugung von Granulaten mit glatter Oberfläche. Bei zu hoher Massendichte der Keime besteht insbesondere im Falle einer zu hohen Sprührate die Gefahr des Zusammenbrechens der Wirbelschicht infolge zu großer Agglomeratbildung.

Die in die Wirbelschicht einzusprühende Lösung oder Suspension weist vorzugsweise einen NaCN-beziehungsweise KCN-Gehalt von 20 bis 45 Gew.-%, insbesondere 30 bis 40 Gew.-%, auf. Sofern erwünscht, enthält die Lösung beziehungsweise Suspension zusätzlich auf den Anwendungszweck gerichtete Zusatzstoffe und/oder Hilfsstoffe zur Beeinflussung der Eigenschaften in jeweils wirksamer Menge.

Die wäßrige Lösung oder Suspension wird mittels einer oder mehrerer innerhalb der Wirbelschicht angeordneter Sprühdüsen auf die Alkalicyanid-Keime gesprüht. Einsetzbar sind Düsen unterschiedlichster Bauart; Zweistoffdüsen mit Außenmischung werden bevorzugt. Die Menge der zu versprühenden Flüssigkeit wird der Fachmann derart einstellen, daß die Stabilität der Wirbelschicht während des Besprühens aufrechterhalten wird. Unter Stabilität wird hierbei verstanden, daß die Keimzahl im wesentlichen konstant bleibt. Bei zu geringer Keimzahl wird diese durch Zufuhr von feinteiligem Material, beispielsweise aus einem Staubabscheider und/oder einer Mühle, mittels welcher Überkorn gebrochen wird, erhöht. Im Falle einer zu hohen Keimbildungsrate läßt sich die Wunschkorngröße nicht mehr befriedigend erreichen, so daß die Keimzahl erniedrigt werden muß.

Die Wirbelschicht-Sprühgranulation kann sowohl diskontinuierlich als auch kontinuierlich durchgeführt werden. Im Handel sind entsprechende Aggregate erhältlich. Bei diskontinuierlicher Fahrweise wird nach Erreichen der Wunschkorngröße das gesamte Granulat aus der Wirbelschicht entnommen. Eine Vorrichtung zur kontinuierlichen Wirbelschicht-Sprühgranulation umfaßt üblicherweise zusätzlich eine Vorrichtung zur Sichtung des Granulats. Die Sichtvorrichtung kann sowohl in die Wirbelschicht-Sprühgranulationsvorrichtung integriert oder außerhalb derselben angeordnet sein.

Es war nicht vorhersehbar, daß durch die Kombination der anspruchsgemäßen Verfahrensmerkmale erfindungsgemäße Alkalicyanid-Granulate mit dem beschriebenen Eigenschaftsbild erhältlich sind. Es war ferner für den Fachmann nicht zu erwarten, daß sich mittels Wirbelschicht-Sprühgranulation Alkalicyanid-Granulate herstellen lassen, ohne daß es zu nennenswerter Hydrolyse des Cyanids zu Formiat und Ammoniak kommt, obgleich feuchtes Cyanid über einen langen Zeitraum (z. B. 0,5 bis 4 Std.) hoher Temperatur ausgesetzt ist. Die Lösegeschwindigkeit erfindungsgemäß hergestellter Granulate liegt im Bereich handelsüblicher Granulate. Auch dies war überraschend, weil es bei der Herstellung anderer Produkte durch Wirbelschicht-Sprühgranulation, wie etwa Natriumperboratmonohydrat (DE-OS 28 13 326), zu einer wesentlichen Verlängerung der Lösezeit kommt.

Die zuvor bei der Beschreibung der erfindungsgemäßen Alkalicyanid-Granulate genannten Hilfsstoffe zur Verminderung des Backverhaltens lassen sich in unterschiedlicher Weise in die Granulate einbringen oder auf der Oberfläche derselben abscheiden. Sofern der Hilfsstoff gleichförmig in dem Granulatkorn verteilt sein soll, ist es zweckmäßig, den Hilfsstoff in Form einer wäßrigen Lösung oder Suspension getrennt oder bereits mit der Alkalicyanid enthaltenden wäßrigen Lösung gemischt dem Wirbelschicht-Sprühgranulator zuzuführen. Im Falle diskontinuierlicher Verfahrensführung reicht es im allgemeinen aus, eine den oder die Hilfsstoffe enthaltende wäßrige Lösung oder Suspension nach weitgehend beendetem Granulataufbau in die Wirbelschicht einzusprühen, so daß sich der/die Hilfsstoffe im wesentlichen auf der Oberfläche des Granulatkorns befindet. Bei kontinuierlicher Wirbelschicht-Sprühgranulation erfolgt die Einbringung des/der Hilfsstoffe in gleichmäßiger Verteilung in das Granulatkorn in gleicher Weise wie bei diskontinuierlicher Ausführungsform. Um die Menge an dem oder den Hilfsstoffen, etwa Antibackmittel aus der Reihe der Silikate, niedrig zu halten, ist es empfehlenswert, diese Stoffe im wesentlichen auf die Oberfläche des Granulatkorns aufzubringen, indem aus dem Wirbelschicht-Sprühgranulator ausgetragenes Granulat entweder mit einer wäßrigen Lösung oder Suspension des beziehungsweise der Hilfsstoffe besprüht und eingetragenes Wasser in einer Nachtrocknungsstufe entfernt wird; diese Maßnahmen können beispielsweise in einem zweiten Wirbelschicht-Sprühgranulator oder Fließbetttrockner mit Sprühvorrichtung in einer ersten Zone durchgeführt werden. Alternativ können der/die Hilfsstoffe auch in trockener Form auf das mit einer Restfeuchte bis zu 5 Gew.-% aus dem Granulator abgezogene Granulat, beispielsweise durch einfaches Mischen, aufgebracht werden; falls erforderlich, wird nachgetrocknet.

Außer den vorteilhaften Eigenschaften der erfindungsgemäß hergestellten Granulate weist das Verfahren eine Reihe von Vorteilen auf. Zur Durchführung des Verfahrens ist lediglich ein Wirbelschicht-Sprühgranulator mit den für derartige Anlagen üblichen Zusatzeinrichtungen erforderlich; damit reduziert sich das bisher mehrstufige Verfahren auf im wesentlichen eine einzige Stufe. Das erfindungsgemäße Verfahren zeichnet sich zudem durch einen geringen Personalaufwand aus. Reparatur- oder verbackungsbedingte Stillstandszeiten und damit Limitierung der Verfügbarkeit der Anlage sind wesentlich geringer als dies bei dem in der Technik benutzten Verfahren der Fall war.

### Beispiele 1 bis 9

### Herstellung von Natriumcyanid-Granulat

Der Wirbelraum eines Wirbelschicht-Sprühgranulators besteht aus einem QVF-Glasschuß mit einem Innendurchmesser von 150 mm und einer Länge von 530 mm. Als Anströmboden wird ein Siebgewebe mit einer Maschenweite von 144 µm verwendet. Die Düse (Zweistoffdüse mit verstellbarer Luftklappe) ist zentral über dem Anströmboden angebracht; der Abstand zwischen Anströmboden und Düsenspitze beträgt 330 mm.

Vor dem Wirbelraum befindet sich der Lufterhitzer mit Temperaturregelung und Luftmengendrosselung. Hinter dem Wirbelraum befindet sich eine Beruhigungszone aus Edelstahl mit einem Durchmesser von 300 mm. Der Luftstrom wird danach zur Entstaubung durch einen Edelstahlzyklon geführt. Der abgeschiedene Feinstaub wird über eine Zellenradschleuse wieder in den Wirbelraum zurückgeführt. Ein Abluftventilator mit einer maximalen Leistung von 500 m³ₙ/h zieht die Luft durch den Wirbelraum und Zyklon.

Zur Erzielung einer gut fluidisierbaren Start-Wirbelschicht werden NaCN-Keime mit der in Tabelle 1 angegebenen Korngröße eingesetzt; Start-Füllmenge 500 g. Bei der Inbetriebnahme der Anlage wird nach Überschreiten des Lockerungspunktes der Start-Keime die Wirbelschicht durch Steigerung der Anströmgeschwindigkeit der Trocknungsluft (Anströmgeschwindigkeit bezogen auf den Leerrohrquerschnitt ca. 3 m/s) expandiert, um die geforderte Massendichte zu erzielen (Starthöhe zu Beginn 330 bis 400 mm). 40 gew.-%ige wäßrige NaCN-Lösung (ca. 23 °C) wird mittels der in die Wirbelschicht eingetauchten Düse (Zerstäuberdruck 2 bar) auf die Keime gesprüht. Die Sprühtropfen treffen die schwebenden NaCN-Keime und verteilen sich auf diesen durch Spreitung. Der intensive Wärme- und Stoffaustausch in der Wirbelschicht bewirkt eine rasche Verfestigung des Flüssigkeitsfilmes durch Trocknung. Während des Wachsens der Partikel wird die Wirbelschicht weiter expandiert. Nach Erreichen des Solldurchmessers wird die Wirbelschichtgranulation abgebrochen und die Granulate werden aus dem Wirbelraum entnommen.

Die Betriebsparameter sowie Stoffeigenschaften folgen aus den Tabellen 1 und 2.

**Tabelle 1**

| Beispiel-Nr. | 1 | 2 | 3 | 4 | 5 | 6 | 7 | 8 *) | 9**) |
|---|---|---|---|---|---|---|---|---|---|
| Betriebsparameter: | | | | | | | | | |
| Lufteingangstemperatur (°C) | 250 | 150 | 150 | 250 | 230 | 230 | 250 | 280 | 250 |
| Luftmenge (m³ₙ/h) | 260 | 220 | 393 | 275 | 260 | 260 | 260 | 275 | 390 |
| Wirbelschichttemperatur (°C) | 180 | 90 | 110 | 150 | 150 | 130 | 180 | 180 | 180 |
| Luftaustrittstemperatur (°C) | 146 | 79 | 82 | 124 | 122 | 100 | 146 | 157 | 150 |
| Einsprühmenge (l/h) | 5,4 | 6,8 | 11,3 | 13,3 | 8,9 | 12,9 | 5,0 | 8,6 | 5,4 |
| Keimdurchmesser (mm) | 0,5 | 1,4 | 2 | 2 | 3 | 3 | 3 | 1,4 | 4,5-5 |
| Sprühdauer (min) | 160 | 55 | 72 | 50 | 41 | 28 | 75 | 97 | 60 |

| Granulat: | | | | | | | | | |
|---|---|---|---|---|---|---|---|---|---|
| Form (H=Himbeere) (K=glatte Kugel) | K | H | K | H | H | H | K | K | K |
| Durchmesser (mm) | 2 | 2 | 5-6 | 4-5 | 4,5-5 | 4,5-5 | 4,5-5 | 3 | 6 |
| Schüttgewicht (g/dm³) | 715 | 734 | 798 | 648 | 734 | 740 | 720 | 806 | 652 |

| | | | | | | | | | |
|---|---|---|---|---|---|---|---|---|---|
| *) eingesprüht wurde 30 gew.-%ige NaCN-Lösung | | | | | | | | | |
| **) Gesprüht wurde eine 40 Gew.-% NaCN und 0,6 Gew.-% eines (Ca,Na)-silikats (Extrusil Fa. Degussa) enthaltende Suspension auf Keime aus Beispiel 7. | | | | | | | | | |

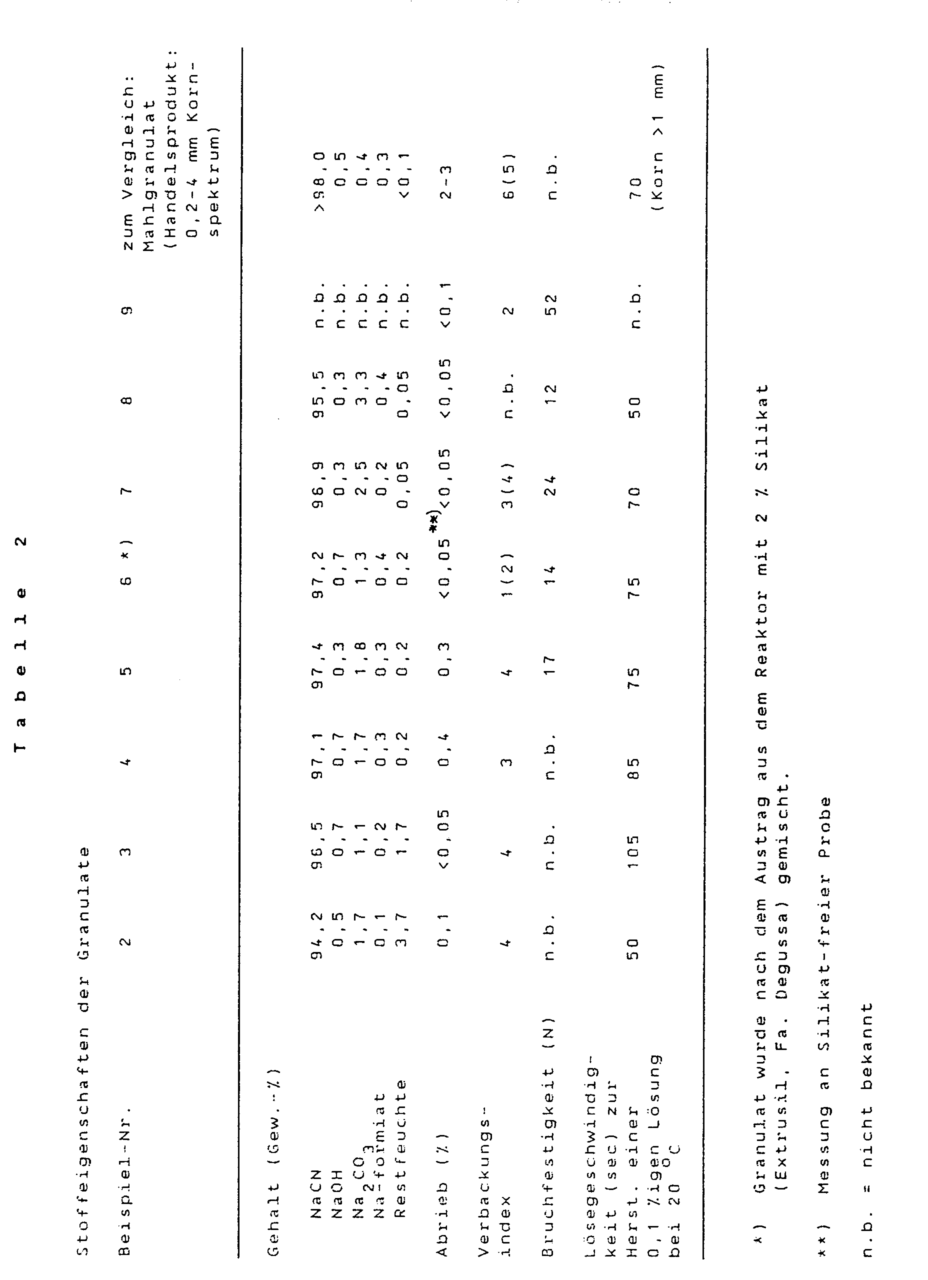

## Patentansprüche

1. Alkalicyanid-Granulate auf der Basis von Natriumcyanid oder Kaliumcyanid mit
(ii) einem Teilchendurchmesser im Bereich von mindestens 0,1 bis 20 mm für mindestens 99 Gew.-% des Granulats,
(iii) einem Schüttgewicht von mindestens 600 g/dm³
(iv) einem Abrieb von weniger als 1 Gew.-%, gemessen im Roll-Abriebtest (Abriebtester TAR der Fa. Erweka mit 20 g Probe, 60 min 20 U/min),
(v) einem Verbackungsindex von maximal 4, gemessen nach 14-tägiger Belastung von 100 g in einem Zylinder der lichten Weite von 5,5 cm mit 10 kg,
**dadurch gekennzeichnet**,
daß sie
(i) aus im wesentlichen kugelförmigen Teilchen mit glatter oder himbeerförmiger Oberflächenstruktur bestehen.

2. Alkalicyanid-Granulate nach Anspruch 1,
dadurch gekennzeichnet,
daß sie einen Alkalicyanidgehalt von mindestens 93 Gew.-%, eine Restfeuchte bis maximal 5 Gew.-% und einen Alkalihydroxidgehalt, wobei das Alkalimetall demjenigen des Alkalicyanids entspricht, von maximal 3 Gew.-% aufweisen.

3. Alkalicyanid-Granulate nach Anspruch 1 oder 2.
dadurch gekennzeichnet,
daß sie zusätzlich ein Antibackmittel in wirksamer Menge, in den Granulatteilchen oder im wesentlichen auf der Oberflache derselben gleichmäßig verteilt enthalten und der Verbackungsindex des Granulats vorzugsweise maximal 3 beträgt.

4. Alkalicyanid-Granulate nach Anspruch 3,
dadurch gekennzeichnet,
daß sie als Antibackmittel ein in wäßriger Dispersion alkalisch wirkendes Silikat, vorzugsweise in einer Menge von 0,1 bis 2 Gew.-% auf der Oberfläche der Granulatteilchen, enthalten.

5. Alkalicyanid-Granulate nach einem oder mehreren der Ansprüche 1 bis 4,
dadurch gekennzeichnet,
daß der mittlere Durchmesser der Teilchen im Bereich von 2 bis 10 mm und das Teilchenspektrum im Bereich des mittleren Teilchendurchmessers plus/minus maximal 1 mm liegt.

6. Verfahren zur Herstellung von Alkalicyanid-Granulaten gemäß den Ansprüchen 1 bis 5 durch Aufsprühen einer mindestens 10 Gew.-% Alkalicyanid enthaltenden wäßrigen Lösung oder Suspension in einer Vorrichtung zur Wirbelschicht-Sprühgranulation auf Alkalicyanid-Keime, Verdampfen des Wassers mittels eines durch die Wirbelschicht strömenden Trocknungsgasstromes, dessen Eingangstemperatur 150 bis 450 °C beträgt, und Austragen des Granulats in an sich bekannter Weise aus der Vorrichtung und Rückführen des anfallenden Staubs in diese,
dadurch gekennzeichnet,
daß man die Temperatur der Wirbelschicht auf 110 bis 350 °C einstellt und die wäßrige Lösung oder Suspension mittels einer oder mehrerer innerhalb der Wirbelschicht angeordneter Sprühdüsen, vorzugsweise Zweistoffdüsen` auf die Alkalicyanid-Keime sprüht.

7. Verfahren nach Anspruch 6 zur Herstellung von Alkalicyanid-Granulaten nach Anspruch 5,
dadurch gekennzeichnet,
daß man eine 20 bis 45 Gew.-%, vorzugsweise 30 bis 40 Gew.-%, Alkalicyanid enthaltende wäßrige Lösung oder Suspension auf Alkalicyanid-Keime mit einem Korndurchmesser von mindestens 500 µm sprüht, wobei die Temperatur der Wirbelschicht im Bereich von 130 bis 300 °C liegt.

8. Verfahren nach einem oder mehreren der Ansprüche 6 bis 7,
dadurch gekennzeichnet,
daß die wäßrige Lösung oder Suspension außer dem Alkalicyanid das jeweilige Alkalihydroxid in einer Menge bis 3 Gew.-%, bezogen auf das jeweilige Alkalicyanid, oder/und ein Antibackmittel in wirksamer Menge, vorzugsweise ein in wäßriger Dispersion alkalisch wirkende Silikat enthält.

9. Verfahren nach einem oder mehreren der Ansprüche 6 bis 8,
dadurch gekennzeichnet,
daß man aus der Wirbelschicht-Sprühgranulationsvorrichtung ausgetragenes Granulat mit einem Antibackmittel, vorzugsweise einem Silikat, nachbehandelt, indem man das ausgetragene Granulat in Gegenwart von bis zu 5 Gew.-% Feuchte, bezogen auf Alkalicyanid, mit dem Antibackmittel, das trocken oder in Form einer wäßrigen Suspension zugegeben wird, mischt und, soweit erforderlich, nachtrocknet.

## Claims

1. Alkali metal cyanide granules based on sodium cyanide or potassium cyanide with
(ii) a particle diameter in the range from at least 0.1 to 20 mm for at least 99 wt.% of the granules,
(iii) a bulk density of at least 600 g/dm³,
(iv) an abrasion of less than 1 wt.% measured in a roller abrasion tester (TAR abrasion tester from Erweka, using 20 g samples, 60 min., 20 rpm),
(v) a caking index of at most 4, measured after applying a load of 10 kg to 100 g in a cylinder with an internal width of 5.5 cm for 14 days,
characterised in that it comprises
(i) substantially spherical particles with a smooth or raspberry-like surface structure,

2. Alkali metal cyanide granules according to Claim 1, characterised in that they have an alkali metal cyanide content of at least 93 wt.%, a residual moisture content of up to a maximum of 5 wt.% and an alkali metal hydroxide content, wherein the alkali metal corresponds to that in the alkali metal cyanide, of at most 3 wt.%.

3. Alkali metal cyanide granules according to Claim 1 or 2, characterised in that they also contain an anti-caking agent in effective amounts, uniformly distributed in the granular particles or substantially on the surface of the same, and that the caking index of the granules is preferably a maximum of 3.

4. Alkali metal cyanide granules according to Claim 3, characterised in that they contain, as anti-caking agent, a silicate which is alkaline in aqueous dispersion, preferably in an amount of 0.1 to 2 wt.%, on the surface of the granules.

5. Alkali metal cyanide granules according to one or more of Claims 1 to 4, characterised in that the average diameter of the particles is in the range 2 to 10 mm and the particle size distribution is in the range comprising the average particle diameter plus or minus a maximum of 1 mm.

6. A process for preparing alkali metal cyanide granules according to Claims 1 to 5 by spraying an aqueous solution or suspension containing at least 10 wt.% of alkali metal cyanide onto alkali metal cyanide nuclei in a device for fluidised bed spray-granulation, evaporating the water by means of a current of drying gas, whose inlet temperature is 150 to 450°C, flowing through the fluidised bed and discharging the granules from the device in a manner known per se and returning thereto any dust which arises, characterised in that the temperature of the fluidised bed is adjusted to 110 to 350°C and the aqueous solution or suspension is sprayed onto the alkali metal nuclei by means of one or more spray-nozzles, preferably two-fluid nozzles, located within the fluidised bed.

7. A process according to Claim 6 for preparing alkali metal cyanide granules according to Claim 5, characterised in that an aqueous solution or suspension containing 20 to 45 wt.%, preferably 30 to 40 wt.%, of alkali metal cyanide is sprayed onto alkali metal cyanide nuclei with a particle diameter of at least 500 µm, wherein the temperature of the fluidised bed is in the range 130 to 300°C.

8. A process according to one or more of Claims 6 to 7, characterised in that the aqueous solution or suspension contains, in addition to the alkali metal cyanide, the relevant alkali metal hydroxide in an amount of up to 3 wt.%, with reference to the relevant alkali metal cyanide, and/or an anti-caking agent in an effective amount, preferably a silicate which is alkaline in aqueous dispersion.

9. A process according to one or more of Claims 6 to 8, characterised in that the granular material discharged from the fluidised bed spray-granulation device is subsequently treated with an anti-caking agent, preferably a silicate, by mixing the discharged granular material, in the presence of up to 5 wt.% of moisture, with reference to the alkali metal cyanide, with the anti-caking agent which is added dry or in the form of an aqueous suspension, and, if required, subsequently drying the product.

## Revendications

1. Granulés de cyanure alcalin à base de cyanure de sodium ou de cyanure de potassium, présentant:
(ii) un diamètre particulaire dans la plage d'au moins 0,1 à 20 mm pour au moins 99 % en poids du granulé,
(iii) un poids spécifique apparent d'au moins 600 g/dm³,
(iv) une abrasion de moins de 1 % en poids, mesurée par le test d'abrasion au rouleau (appareil d'essai d'abrasion TAR de la société Erweka avec un échantillon de 20 g, à 20 tours/min, pendant 60 minutes),
(v) un indice d'agglutination de 4 au maximum, mesuré après sollicitation pendant 14 jours de 100 g dans un cylindre d'un diamètre intérieur de 5,5 cm avec 10 kg,
caractérisés en ce :
(i) qu'ils sont constitués de particules sensiblement sphériques de structure superficielle lisse ou en forme de framboise.

2. Granulés de cyanure alcalin selon la revendication 1, caractérisés en ce qu'ils présentent une teneur en cyanure alcalin d'au moins 93 % en poids, une humidité résiduaire allant au maximum jusqu'à 5 % en poids et une teneur en hydroxyde alcalin, dont le métal alcalin correspond à celui du cyanure alcalin, de 3 % en poids au maximum.

3. Granulés de cyanure alcalin selon la revendication 1 ou 2, caractérisés en ce qu'ils contiennent en outre un agent antiagglutinant en quantité efficace, réparti uniformément dans les particules ou sensiblement à leur surface, et l'indice d'agglutination du granulé est de préférence de 3 au maximum.

4. Granulés de cyanure alcalin selon la revendication 3, caractérisés en ce qu'ils contiennent comme agent antiagglutinant un silicate à effet alcalin en dispersion aqueuse, de préférence en quantité de 0,1 à 2 % en poids, à la surface des particules de granulés.

5. Granulés de cyanure alcalin selon une ou plusieurs des revendications 1 à 4, caractérisés en ce que le diamètre moyen des particules se situe dans la plage de 2 à 10 mm et le spectre de particules se situe dans la plage du diamètre moyen des particules plus ou moins 1 mm au maximum.

6. Procédé de production de granulés de cyanure alcalin selon les revendications 1 à 5 par pulvérisation sur des germes de cyanure alcalin d'une solution ou d'une suspension aqueuse contenant au moins 10 % en poids de cyanure alcalin, dans un dispositif de granulation par pulvérisation à lit tourbillonnant, évaporation de l'eau au moyen d'un courant de gaz de séchage s'écoulant à travers le lit tourbillonnant, courant dont la température d'entrée est de 150 à 450°C, et extraction du granulé du dispositif de manière connue en soi et recyclage de la poussière produite à ce dispositif, caractérisé en ce qu'on règle la température du lit tourbillonnant à 110 à 350°C et on pulvérise la solution ou la suspensuin aqueuse sur les germes de cyanure alcalin au moyen d'une ou plusieurs buses de pulvérisation, de préférence de buses doubles, agencées à l'intérieur du lit tourbillonnant.

7. Procédé selon la revendication 6 pour la production de granulés de cyanure alcalin selon la revendication 5, caractérisé en ce qu'on pulvérise une solution ou une suspension aqueuse contenant 20 à 45 % en poids, de préférence 30 à 40 % en poids, de cyanure alcalin sur des germes de cyanure alcalin ayant un diamètre particulaire d'au moins 500 µm, la température du lit tourbillonnant se situant dans la plage de 130 à 300°C.

8. Procédé selon une ou plusieurs des revendications 6 et 7, caractérisé en ce que la solution ou la suspension aqueuse contient, en-dehors du cyanure alcalin, l'hydroxyde alcalin respectif en quantité allant jusqu'à 3 % en poids, par rapport au cyanure alcalin respectif, ou/et un agent antiagglutinant en quantité efficace, de préférence un silicate à effet alcalin en dispersion aqueuse.

9. Procédé selon une ou plusieurs des revendications 6 à 8, caractérisé en ce qu'on retraite le granulé extrait du dispositif de granulation par pulvérisation à lit tourbillonnant par un agent antiagglutination, de préférence, un silicate, en mélangeant le granulé extrait, en présence d'une porportion jusqu'à 5 % en poids d'humidité, par rapport au cyanure alcalin, avec l'agent antiagglutinant, qui est ajouté à l'état sec ou sous la forme d'une suspension aqueuse, et, pour autant que cela soit nécessaire, en séchant.
